(19) Europäisches Patentamt
European Patent Office
Office européen des brevets

(11) **EP 2 190 711 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(21) Anmeldenummer: **08786298.3**

(22) Anmeldetag: **22.07.2008**

(51) Int Cl.:
*B62D 1/28* (2006.01)     *B60W 40/072* (2012.01)
*B60W 40/076* (2012.01)     *B62D 15/02* (2006.01)
*B60T 8/1755* (2006.01)     *G05D 1/02* (2006.01)

(86) Internationale Anmeldenummer:
**PCT/EP2008/059562**

(87) Internationale Veröffentlichungsnummer:
**WO 2009/037029 (26.03.2009 Gazette 2009/13)**

(54) **VERFAHREN FÜR DIE STEUERUNG EINES FAHRERASSISTENZSYSTEMS**

METHOD FOR CONTROLLING A DRIVER ASSISTANCE SYSTEM

PROCÉDÉ DE COMMANDE D'UN SYSTÈME D'ASSISTANCE AU CONDUCTEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.09.2007 DE 102007043911**

(43) Veröffentlichungstag der Anmeldung:
**02.06.2010 Patentblatt 2010/22**

(73) Patentinhaber: **Robert Bosch GmbH**
**70442 Stuttgart (DE)**

(72) Erfinder:
• **BUERKLE, Lutz**
**71229 Leonberg (DE)**
• **RENTSCHLER, Tobias**
**75180 Pforzheim (DE)**
• **APP, Thomas**
**75059 Zaisenhausen (DE)**

(56) Entgegenhaltungen:
**EP-A- 1 074 904      EP-A- 1 674 361**
**EP-A- 1 674 375      WO-A-03/013940**
**DE-A1- 19 720 626      GB-A- 2 095 350**
**US-A1- 2004 186 651**

**Beschreibung**

Stand der Technik

Die Erfindung betrifft ein Verfahren für die Steuerung eines Fahrerassistenzsystems nach dem Oberbegriff des Anspruchs 1. Eine Assistenzfunktion zur Spurverlassenswarnung (LDW =Lane Departure Warning), bei der der Fahrer eines Kraftfahrzeugs akustisch oder haptisch vor dem Verlassen der Fahrspur gewarnt wird, ist inzwischen, insbesondere im Nutzfahrzeugbereich, kommerziell verfügbar. Neben dieser Assistenzfunktion ist aus den folgenden Artikeln auch eine Lenkassistenzfunktion (LKS = Lane Keeping Support) bekannt, die den Fahrer durch gerichtete Führungsmomente beim Halten des Fahrzeugs in der Fahrspur aktiv unterstützt.

Bei einem Fahrerassistenzsystem mit LKS-Assistenzfunktion der eingangs genannten Art kann es zu einer im Wesentlichen stabilen lateralen Pendelbewegung des Fahrzeugs innerhalb der Fahrspur kommen. Diese Pendelbewegung entsteht dadurch, dass die LKS-Assistenzfunktion eingreift, wenn das Fahrzeug sich den Rändern des um eine Referenz- oder Solltrajektorie definierten Korridors nähert, um das Fahrzeug in der Spur zu halten. Die Referenz- oder Solltrajektorie kann beispielsweise die Mitte der Fahrspur sein.

Aus DE 101 37292 A1 ist ein Verfahren zum Betreiben eines Fahrerassistenzsystems eines Fahrzeugs, insbesondere eines Kraftfahrzeugs, mit einer servounterstützten Lenkung, mit folgenden Verfahrensschritten bekannt:

- Erfassen oder Abschätzen von Umgebungsdaten einer, vorzugsweise momentanen, Verkehrssituation,
- Erfassen oder Abschätzen von, vorzugsweise momentanen, Bewegungsdaten des Fahrzeugs,
- Vergleichen der erfassten oder abgeschätzten Umgebungsdaten mit den Bewegungsdaten des Fahrzeugs,
- Änderung der Unterstützung einer Lerikhandhabe nach Maßgabe des Vergleichs.

Aus DE 197 20 626 A1 ist eine Fahrzustand-Überwachungsvorrichtung für ein Kraftfahrzeug bekannt, das zur Überwachung des Fahrzustands eines Fahrers des Fahrzeugs dient. Das Verhalten des Fahrzeugs und/oder ein Fahrvorgang des Fahrers und/oder mindestens ein Zustand des Fahrers werden detektiert, um hierdurch Fahrzustand-Anzeigedaten zu erzeugen, die den Fahrzustand des Fahrers anzeigen. Es wird auf der Basis der erzeugten Fahrzustand-Anzeigedaten festgestellt, ob der Fahrzustand des Fahrers unnormal ist. Wenn nicht festgestellt wird, dass der Fahrzustand des Fahrers unnormal ist, wird ein Maß an Normalität des Fahrzustandes des Fahrers durch Eingeben einer Mehrzahl von Einzeldaten der Fahrzustand-Anzeigedaten in ein neutrales Netz festgestellt. Es erfolgt eine Warnung und/oder Steuerung des Fahrzeugs abhängig von einem Ergebnis der Feststellung, ob der Fahrzustand des Fahrers unnormal ist, und dem Maß an Normalität des Fahrzustands des Fahrers.

Dokument EP 1 074 904 wid als nähster Stand der Technik erkannt und bechreibt die Merkmale des Oberbegriffs des Anspruchs 1.

Offenbarung der Erfindung

Die Steuerung eines Fahrerassistenzsystems mit einer die Querführung des Fahrzeugs unterstützenden Assistenzfunktion, wie insbesondere LKS (Lane Keeping Support), wird weiter verbessert. Insbesondere wird eine durch Eingriffe der LKS-Assistenzfunktion verursachte Pendelbewegung des Fahrzeugs schnellstmöglich und mit geringem Aufwand detektiert werden, da die Erfassung einer derartigen Pendelbewegung ein wichtiger Baustein für die Auslösung verschiedener systeminterner Funktionen, zur Schätzung von Eigenschaften der Fahrspur und/oder Betriebszuständen des Fahrzeugs oder auch zur Kalibrierung des Fahrerassistenzsystems, insbesondere der LKS-Assistenzfunktion, ist.

Mit einer lateralen Pendelbewegung des Fahrzeugs ist eine Änderung der Querablage des Fahrzeugs von der Mitte der Fahrspur und eine Änderung des Differenzwinkels zwischen der Fahrtrichtung des Fahrzeugs und dem Verlauf der Fahrspur verbunden. Durch Erfassung der Querablage und des Differenzwinkels und die erfindungsgemäße Verarbeitung kann eine Pendelbewegung des Fahrzeugs sehr schnell erkannt werden.

Vorteilhafte Wirkungen

Das erfindungsgemäß vorgeschlagene Verfahren für die Detektion einer lateralen Pendelbewegung eines von einer LKS-Funktion unterstützten Fahrzeugs ist sehr schnell und schont Ressourcen, wie Laufzeit, Messzeit und Speicherkapazität. In Vergleich mit einem auf einer Fourieranalyse beruhenden Verfahren, das die Erfassung zahlreicher Messwerte mit anschließender Fouriertransformation erfordert, kann eine Pendelbewegung nach vergleichsweise kurzer Dauer und ohne langwierige Messungen detektiert werden. In der Praxis reicht bereits weniger als eine einzige Oszillationsperiode aus, um das Auftreten einer Pendelbewegung zuverlässig erfassen zu können. Die sehr kurze Detektionszeit ermöglicht dann auch einen sehr schnellen Eingriff, um beispielsweise eine zu starke und störende Pendelbewegung durch Eingriff in Systeme des Fahrzeugs zu dämpfen.

Weitere Vorteile ergeben sich aus der Beschreibung, den Unteransprüchen und der Zeichnung.

Kurze Beschreibung der Zeichnungen

Ausführungsformen der Erfindung werden nachfolgend unter Bezug auf die Zeichnung näher erläutert. Dabei zeigt

Figur 1    ein Blockschaltbild eines Fahrerassistenzsystems;

Figur 2    ein Ablaufdiagramm;

Figur 3    eine Aufsicht auf einen Verkehrsraum.

Ausführungsformen der Erfindung

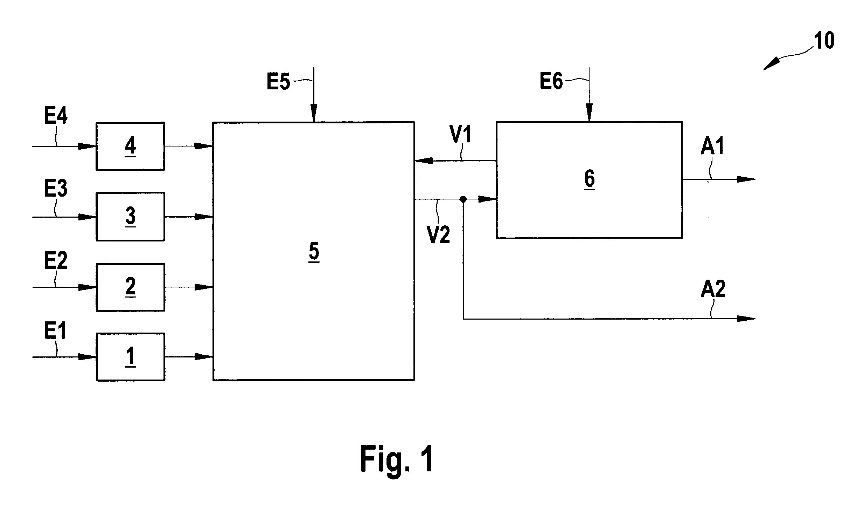

Die Erfindung setzt voraus, dass in einem Fahrzeug ein Fahrerassistenzsystem mit einer Spurerkennungsfunktion, insbesondere videobasierten Spurerkennungsfunktion, angeordnet ist. Mittels der Spurerkennungsfunktion kann die relative Fahrzeugposition innerhalb der Fahrspur erfasst werden. Für die hier beschriebene Erfindung müssen die aufbereiteten (wenn nötig gefilterten) Größen, wie laterale Fahrzeugablage zu einer Referenztrajektorie, zum Beispiel der Fahrspurmitte, der Differenzwinkel zwischen der Fahrzeuglängsachse und der Referenztrajektorie, sowie die Krümmung der Trajektorien, zum Beispiel der Fahrbahnkrümmung, vorliegen. Ebenso werden diverse fahrdynamische Größen des Fahrzeugs, wie insbesondere die Fahrzeuglängsgeschwindigkeit und das von dem Fahrer aufgebrachte Lenkradmoment benötigt. Figur 1 zeigt ein Blockdiagramm eines Fahrerassistenzsystems 10, das erfindungsgemäß steuerbar ist. Das Fahrerassistenzsystem 10 umfasst zunächst ein Funktionsmodul 5 für die Detektion. Das Funktionsmodul 5 ist mit einem weiteren Funktionsmodul 6 für die Aktion verbunden. Die Funktionsmodule 5 und 6 umfassen mehrere Eingangsanschlüsse E1 bis E5 und E6.Der Eingangsanschluss E1 ist über ein Filter 1 mit dem Funktionsmodul 5 verbunden. Über den Eingangsanschluss E1 wird dem Funktionsmodul 5 das von einem entsprechenden Sensor erfasste Lenkradmoment zugeführt. Der Eingangsanschluss E2 ist über ein Filter 2 mit dem Funktionsmodul 5 verbunden. Über den Eingangsanschluss E2 wird dem Funktionsmodul 5 die Krümmung der Trajektorie zugeführt, die beispielsweise mit der Krümmung der Fahrspur übereinstimmen kann. Der Eingangsanschluss E3 ist über ein Filter 3 mit dem Funktionsmodul 5 verbunden. Über den Eingangsanschluss E3 wird dem Funktionsmodul 5 der Differenzwinkel zwischen der Fahrzeuglängsachse und der Referenztrajektorie, zum Beispiel der Richtung der Fahrspur, zugeführt. Der Eingangsanschluss E4 ist über ein Filter 4 mit dem Funktionsmodul 5 verbunden. Über den Eingangsanschluss E4 wird dem Funktionsmodul 5 die laterale Ablage des Fahrzeugs von der Referenztrajektorie, zum Beispiel der Mitte der Fahrspur, zugeführt. Über den Eingangsanschluss E5 wird dem Funktionsmodul 5 die Geschwindigkeit des Fahrzeugs zugeführt. Über den Eingangsanschluss E6 werden dem Funktionsmodul 6 weitere Betriebskenngrößen, wie beispielsweise Regelabweichungen des LKS-Reglers, zugeleitet. Die Funktionsmodule 5 und 6 sind über Verbindungsleitungen V1 und V2 miteinander verbunden. Mit Bezugsziffer A1 ist ein Ausgangsanschluss des Funktionsmoduls 6, mit Bezugsziffer A2 ein Ausgangsanschluss des Funktionsmoduls 5 bezeichnet.

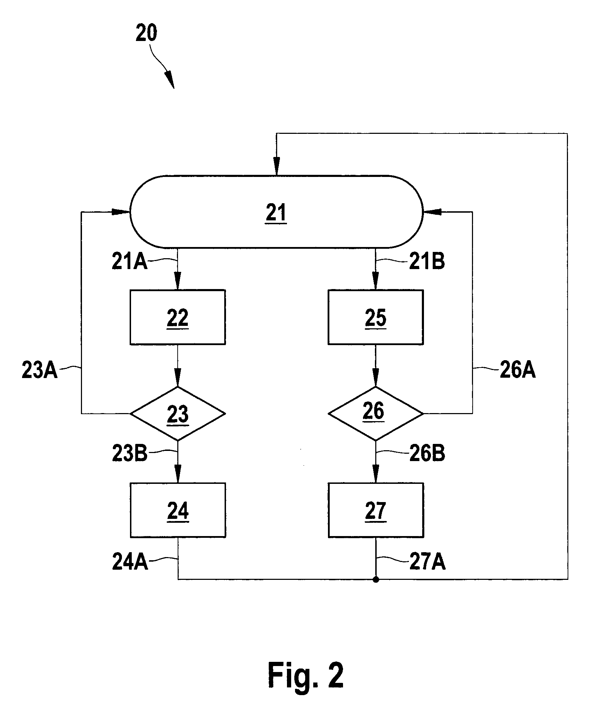

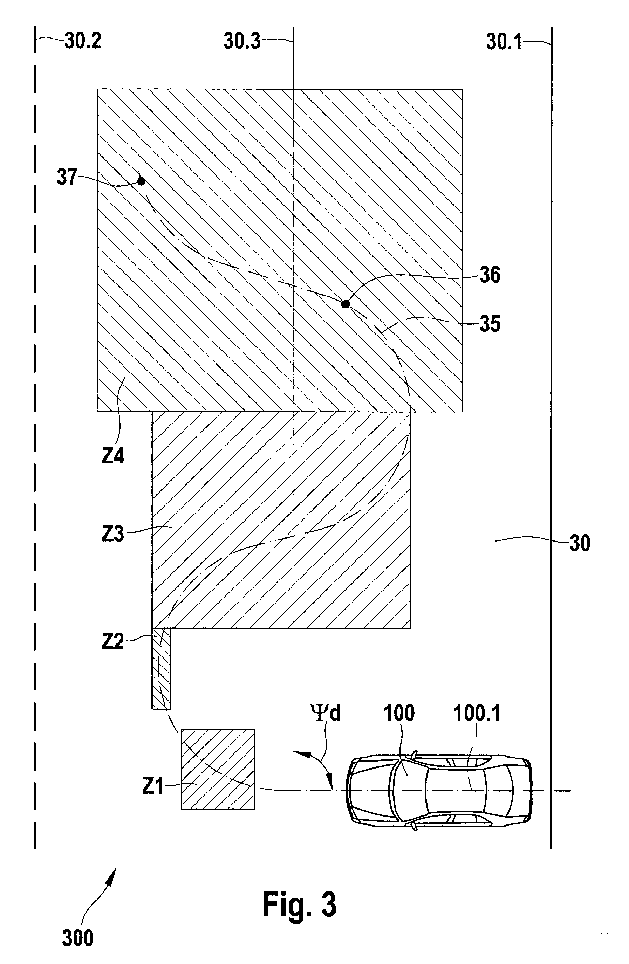

Im Folgenden wird eine Ausführungsform der Erfindung unter Bezug auf Figur 2 und Figur 3 weiter erläutert. In Figur 2 ist ein Ablaufdiagramm 20 dargestellt, auf das weiter unten noch eingegangen wird. Im Folgenden wird zunächst auf Figur 3 Bezug genommen. Figur 3 zeigt die Aufsicht auf einen Verkehrsraum 300 mit einer von den Fahrspurmarkierungen 30.1 und 30.2 begrenzten Fahrspur 30. Auf der Fahrspur 30 bewegt sich das mit dem Fahrerassistenzsystem 10 ausgestattete Fahrzeug 100 entlang der Trajektorie 35. Die Mitte der Fahrspur 30, die bei der Aktivierung der LKS-Funktion des Fahrerassistenzsystems im Idealfall auch der Referenztrajektorie des Fahrzeugs 100 entspricht, ist mit Bezugsziffer 30.3 bezeichnet. Ein in Fahrtrichtung vor dem Fahrzeug 100 liegender Bereich der Fahrspur 30 ist in Zonen Z1, Z2, Z3, Z4 unterteilt. Dabei liegt die Zone Z1 unmittelbar vor dem Fahrzeug 100, während die Zone Z4 am weitesten von dem Fahrzeug 100 entfernt ist. Ein großer Zeitvorteil der erfindungsgemäßen Lösung ist, dass in Zone Z1 aus der vorliegenden aktuellen Bewegung des Fahrzeugs 100 die Bewegungsrichtung des Fahrzeugs nach links oder nach rechts ausgewertet wird und somit ein schneller Startpunkt für den Beginn der Detektion einer Pendelbewegung des Fahrzeugs 100 gefunden wird. Das Fahrzeug 100 muss sequentiell die Zonen Z1 bis Z4 passieren, damit eine Pendelbewegung erkannt werden kann. Für die Zonen Z1 bis Z4 gelten folgende Bedingungen:

Zone Z1:

Der Zone Z1 liegt ein Intervall der lateralen Ablage des Fahrzeugs 100 zugrunde. Wegen der Robustheit des erfindungsgemäßen Verfahrens im Hinblick auf beispielsweise Rauscheinflüsse sollte die Grenze der Zone 1v nicht auf der Mitte der Fahrspur liegen. Das Fahrzeug 100 muss sich in dieser Zone Z1 befinden, damit in dem Funktionsmodul

ein Startpunkt für die Detektion einer Pendelbewegung des Fahrzeugs 100 gesetzt wird. Eine Oszillation oder Pendelbewegung des Fahrzeugs 100 beginnt mit einer Bewegung des Fahrzeugs 100 nach links, wenn folgende Bedingung erfüllt ist:

$$(1) \qquad -Y_{Grenz} > Y > -2 \cdot Y_{Grenz}$$

Eine Oszillation oder Pendelbewegung des Fahrzeugs 100 beginnt mit einer Bewegung des Fahrzeugs 100 nach rechts, wenn folgende Bedingung erfüllt ist:

$$(2) \qquad Y_{Grenz} < Y < 2 \cdot Y_{Grenz}$$

Zone Z2:

In Zone Z2 muss der Betrag $|\Psi_d|$ des Differenzwinkels $\Psi_d$ zwischen der Fahrzeuglängsachse 100.1 und der Richtung der Fahrspur 30 bzw. der Richtung ihrer Mitte 30.3 unter eine definierte Schranke $\Psi_{Grenz}$ fallen. Es muss also folgende Bedingung gelten:

$$(3) \qquad |\Psi_d| < \Psi_{Grenz}$$

Beim Erreichen dieser Schranke wird die dann vorliegende Querablage $Y_{Zone\ 2}$ gespeichert.

Zone Z3:

In Zone Z3 werden die im Folgenden beschriebenen drei Kriterien ausgewertet. Zunächst muss wiederum die Bedingung (3) erfüllt sein. Der Differenzwinkel zwischen der Fahrzeuglängsachse und der Richtung der Fahrspur muss also unter eine definierte Schranke fallen.
Weiterhin muss die an diesem Punkt vorliegende Querablage relativ zu der in Zone Z2 festgestellten Querablage $Y_{Zone\ 2}$ eine Ablagendifferenz von mindestens $dY_{Zone\ 3}$ erreicht haben. Schließlich müssen die beiden zuvor genannten Bedingungen innerhalb einer vorgebbaren Zeitdauer $\Delta T1$ erreicht werden, die für die Zone Z3 vorgegeben wird. Wenn dies nicht der Fall ist, also die vorgegebene Zeitdauer $\Delta T1$ überschritten wird, ohne dass die zuvor genannten beiden Bedingungen erfüllt sind, wird der bisherige Detektionsprozess ergebnislos abgebrochen und es wird ein neuer Detektionsprozess mit den für die Zone Z1 festgelegten Bedingungen gestartet.

Zone Z4:

In Zone Z4 wird, beispielsweise im Punkt 36, eine Pendelbewegung des Fahrzeugs 100 erkannt, wenn die für die Zone Z3 vorgeschriebenen Bedingungen erfüllt wurden und zusätzlich in diesem Punkt 36 eine der folgenden Bedingungen, bezogen auf die initiale Richtung in der Zone Z1, erfüllt ist:

$$(4) \qquad \text{links:} \qquad Y < Y_{Grenz}$$

oder

$$(5) \quad \text{rechts:} \quad Y > -Y_{Grenz}$$

Die Information bzw. der Betriebszustand "Pendelbewegung erkannt" wird von dem Funktionsmodul 5 generiert, wenn alle vorgenannten Bedingungen für alle Zonen Z1 bis Z4 erfüllt sind. Diese Information wird über die Verbindungsleitung V2 an das Funktionsmodul 6 weitergegeben und auch an dem Ausgangsanschluss A2 bereitgestellt. Dieser Betriebszustand wird solange aufrechterhalten bis das Funktionsmodul 6 den Detektionsprozess zurücksetzt und die Bedingung für den Start eines erneuten Detektionsprozesses bei einer Zone Z1 festlegt.

Über den Ausgangsanschluss A1 steuert das Funktionsmodul 6 Maßnahmen, die als Aktion auf die erkannte laterale Pendelbewegung eingeleitet werden sollen. Beispielsweise kann es sich hier um einen Eingriff in das Lenksystem des Fahrzeugs 100 im Rahmen einer LKS-Assistenzfunktion des Fahrerassistenzsystems 1 des Fahrzeugs handeln. Diese Aktion muss dabei nicht sofort nach der Detektion einer Pendelbewegung des Fahrzeugs 100 eingeleitet werden, sondern kann sich noch zusätzlich an anderen Kriterien orientieren. Als Beispiel sei die Aktivierung eines Eingriffs für die Unterdrückung einer weiteren Fahrzeugoszillation genannt. Vorteilhaft wird ein derartiger Eingriff nach der Detektion einer Pendelbewegung des Fahrzeugs erst dann durchgeführt, wenn der Differenzwinkel auf einen möglichst kleinen Wert, vorzugsweise den Wert Null, abgefallen ist. Dies ist etwa bei dem Punkt 37 in Figur 3 der Fall. Die Dauer des erforderlichen Eingriffs wird dabei vorteilhaft von der Geschwindigkeit des Fahrzeugs abhängig gemacht und von dem Funktionsmodul 6 bestimmt. Das Funktionsmodul 6 legt dabei auch fest, wie lange der einmal erkannte Betriebszustand aufrechterhalten wird und leitet diese Information über die Verbindungsleitung V1 an das Funktionsmodul 5 weiter.

Die folgende Beschreibung bezieht sich insbesondere auf das in Figur 2 dargestellte Ablaufdiagramm. Die Erfindung geht von der Tatsache aus, dass eine laterale Pendelbewegung des Fahrzeugs 100 nur bei einem fahrenden Fahrzeug auftreten kann. Die Längsgeschwindigkeit des Fahrzeugs 100 sollte also größer als der Wert Null sein. Vorteilhaft kann bei einer Ausführungsform der Erfindung daher eine Minimalgeschwindigkeit als Grenzwert vorgegeben werden. Oberhalb dieses Grenzwerts ist die Erfindung anwendbar. Um zu verhindern, dass die Einwirkung der Zentrifugalkraft auf das Fahrzeug bei Kurvenfahrt eine Pendelbewegung des Fahrzeugs im Sinne der Erfindung vortäuscht, wird die Erfindung zweckmäßig nur auf einer im Wesentlichen gerade verlaufenden Fahrspur eingesetzt. Vorteilhaft wird daher ein Grenzwert für die Krümmung der Fahrspur vorgegeben. Die Erfindung kommt nur dann zum Einsatz, wenn die Krümmung unterhalb dieses Grenzwerts liegt. Da mittels der Erfindung nur Pendelbewegungen des Fahrzeugs erfasst werden sollen, die durch den Eingriff einer Assistenzfunktion des Fahrerassistenzsystems, insbesondere der LKS-Funktion, verursacht werden, wird zweckmäßig auch das Lenkradmoment des Fahrers überwacht. Dadurch kann ausgeschlossen werden, dass es sich bei einer erfassten Pendelbewegung um eine solche handelt, die auf einen bewussten Eingriff des Fahrers in das Lenkverhalten des Fahrzeugs zurückzuführen ist. Sind die drei genannten Voraussetzungen erfüllt, wird die Erkennung einer ggf. vorliegenden Pendelbewegung mit dem Schritt 21 (Figur 2) gestartet. Dabei wird zunächst geprüft, ob die für die Zone Z1 definierten Bedingungen vorliegen oder nicht, wobei noch unterschieden wird, ob die Pendelbewegung des Fahrzeugs 100 mit einer Bewegung des Fahrzeugs nach links (Schritt 21A) oder nach rechts (Schritt 21B) beginnt. Beginnt die Pendelbewegung mit einer Bewegung nach links, dann folgt Schritt 21A, der zu dem Schritt 22 überleitet. In dem Schritt 22 wird geprüft, ob die für die Zone Z2 festgelegten Bedingungen erfüllt sind. Ist das der Fall, wird die dabei erfasste Querablage gespeichert und zu dem Schritt 23 übergeleitet. In Schritt 23 wird geprüft, ob die für die Zone Z4 festgelegten Bedingungen erfüllt sind. Ist dies nicht der Fall, und wird insbesondere die festgelegte Zeitgrenze nicht eingehalten, dann wird der Prozess zunächst abgebrochen (Schritt 23A) und nach Rückkehr zu dem Anfangsschritt 21 ggf. erneut begonnen. Sind dagegen andererseits die für die Zone Z3 festgelegten Bedingungen erfüllt, dann wird im Bereich der Zone Z4 zunächst festgestellt (Schritt 24), dass eine Pendelbewegung detektiert worden ist (siehe Punkt 36 in Figur 3). Soweit erforderlich und vorgesehen, kann dann auch noch, mit Hilfe des Funktionsmoduls 6, ein Eingriff in Systeme des Fahrzeugs 100 erfolgen (Punkt 37 in Figur 3). Nach erfolgreichem Abschluss der beschriebenen Prozessschritte erfolgt mit dem Schritt 24A eine Rückkehr zum Startpunkt, also dem Schritt 21. Ein analoger Ablauf findet mit den Schritten 21, 21B, 25, 26, 26A, 26B, 27, 27A statt, wenn die Pendelbewegung des Fahrzeugs 100 mit einer Bewegung nach rechts eingeleitet wird.

**Patentansprüche**

**1.** Verfahren für die Steuerung eines Fahrerassistenzsystems (10) mit einer Funktion (LKS), bei dem die Aktivierung der Funktion (LKS) zu lateralen Pendelbewegungen des Fahrzeugs (100) führen kann, **dadurch gekennzeichnet, dass** in einem vor dem Fahrzeug (100) liegenden Bereich der Fahrspur (30) Zonen (Z1, Z2, Z3, Z4) mit vorgegebenen Bedingungen definiert werden, dass das Fahrzeug (100) die Zonen (Z1, Z2, Z3, Z4) sequenziell durchfährt, dass innerhalb der Zonen (Z1, Z2, Z3, Z4) überprüft wird, ob der jeweilige Fahrzustand des Fahrzeugs mit diesen Bedingungen übereinstimmt, und dass bei Übereinstimmung das Vorhandensein einer durch Eingriffe der Funktion (LKS) verursachten Pendelbewegung des Fahrzeugs (100) angenommen wird.

2. Verfahren nach Anspruch 1, **dadurch gekennzeichnet, dass** in einer ersten, unmittelbar vor dem Fahrzeug (100) liegenden Zone (Z1) geprüft wird, ob und ggf. in welche Richtung sich das Fahrzeug (100) von einer Referenztrajektorie, zum Beispiel der Fahrspurmitte (30.3), fortbewegt.

3. Verfahren nach einem der vorhergehenden Ansprüche, **dadurch gekennzeichnet, dass** bei einer Bewegung des Fahrzeugs (100) nach links ein Detektionsstartpunkt (Schritt 21) gesetzt wird, wenn die folgende Bedingung erfüllt ist:

$$(1) \qquad -Y_{Grenz} > Y > -2 \cdot Y_{Grenz},$$

mit
Y = Querablage des Fahrzeugs und
$Y_{Grenz}$ = = Grenzwert der Querablage des Fahrzeugs.

4. Verfahren nach einem der vorhergehenden Ansprüche, **dadurch gekennzeichnet, dass** bei einer Bewegung des Fahrzeugs (100) nach rechts ein Detektionsstartpunkt (Schritt 21) gesetzt wird, wenn die folgende Bedingung erfüllt ist:

$$(2) \qquad Y_{Grenz} < Y < 2 \cdot Y_{Grenz},$$

mit
Y = Querablage des Fahrzeugs und
$Y_{Grenz}$ = Grenzwert der Querablage des Fahrzeugs.

5. Verfahren nach einem der vorhergehenden Ansprüche, **dadurch gekennzeichnet, dass** ein Grenzwert ($\Psi_{Grenz}$) des Differenzwinkels ($\Psi_d$) festgelegt wird, wobei als Differenzwinkel ($\Psi_d$) der Winkel zwischen der Fahrtrichtung des Fahrzeugs und der Richtung einer Referenztrajektorie, zum Beispiel der Richtung der Fahrspur, definiert ist, und dass in einer unmittelbar an die erste Zone (Z1) anschließenden zweiten Zone (Z2) der Differenzwinkel ($\Psi_d$) gemessen und anschließend geprüft wird, ob der Betragswert des gemessenen Differenzwinkels ($\Psi_d$) unterhalb des festgelegten Grenzwerts ($\Psi_{Grenz}$) liegt.

6. Verfahren nach einem der vorhergehenden Ansprüche, **dadurch gekennzeichnet, dass** bei Unterschreiten des Betrags des Differenzwinkels ($\Psi_d$), die in der zweiten Zone (Z2) vorliegende Querablage ($Y_{Zone\ 2}$) des Fahrzeugs (100) gespeichert wird.

7. Verfahren nach einem der vorhergehenden Ansprüche, **dadurch gekennzeichnet, dass** in einer dritten Zone (Z3) geprüft wird, ob gemäß dem in der zweiten Zone (Z2) ermittelten Ergebnis der Betragswert des Differenzwinkels ($\Psi_d$) unterhalb des vorgegebenen Grenzwerts ($\Psi_d$) liegt, dass die in der dritten Zone (Z3) vorliegende Querablage ($Y_{zone\ 3}$) des Fahrzeugs (100) erfasst wird, dass die in der zweiten Zone (Z2) und dritten Zone (Z3) erfassten Werte der Querablage miteinander verglichen werden , dass ein Grenzwert ($dY_{zone\ 3}$) für die in der dritten Zone (Z3) erfasste Querablage bestimmt wird und dass geprüft wird, ob die Differenz der in der zweiten und dritten Zone erfassten Querablagen unterhalb dieses Grenzwerts liegt.

8. Verfahren nach einem der vorhergehenden Ansprüche, **dadurch gekennzeichnet, dass** für die Detektion einer lateralen Pendelbewegung des Fahrzeugs (100) ein Zeitintervall ($\Delta T$) vorgegeben wird, dass bei Nichterkennung einer Pendelbewegung innerhalb des Zeitintervalls ($\Delta T$) der Detektionsprozess abgebrochen und ggf. zu einem späteren Zeitpunkt wieder erneut gestartet wird.

9. Verfahren nach einem der vorhergehenden Ansprüche, **dadurch gekennzeichnet, dass** die Geschwindigkeit des Fahrzeugs (100) erfasst wird, dass ein Grenzwert für die Geschwindigkeit (Minimalgeschwindigkeit) festgelegt wird und dass das Detektionsverfahren für die Erfassung einer Pendelbewegung des Fahrzeugs nur dann eingeleitet wird, wenn die Geschwindigkeit des Fahrzeugs die festgelegte Minimalgeschwindigkeit überschreitet.

**10.** Verfahren nach einem der vorhergehenden Ansprüche, **dadurch gekennzeichnet, dass** ein Grenzwert für die Krümmung einer Referenztrajektorie, zum Beispiel der Fahrspur (30), festgelegt wird, dass die Krümmung der Referenztrajektorie (zum Beispiel Fahrspur 30) erfasst wird, und dass das Detektionsverfahren für die Erfassung einer Pendelbewegung des Fahrzeugs (100) nur dann eingeleitet wird, wenn der Betrag der Krümmung der Referenztrajektorie unterhalb des festgelegten Grenzwerts der Krümmung liegt.

**11.** Verfahren nach einem der vorhergehenden Ansprüche, **dadurch gekennzeichnet, dass** ein Grenzwert für das Lenkmoment vorgegeben wird, dass das Lenkmoment überwacht wird, und dass das Detektionsverfahren für die Erfassung einer Pendelbewegung des Fahrzeugs nur dann eingeleitet wird, wenn das erfasste Lenkmoment nicht auf einen Eingriff des Fahrers zurückzuführen ist.

**12.** Verfahren nach einem der vorhergehenden Ansprüche, **dadurch gekennzeichnet, dass** der Differenzwinkel zwischen der Fahrtrichtung des Fahrzeugs (100) und dem Verlauf der Referenztrajektorie (zum Beispiel der Fahrspur 30) überwacht wird, und dass ein Eingriff in mindestens ein Bordsystem des Fahrzeugs (100) nach Detektion einer Pendelbewegung zu deren Dämpfung dann durchgeführt wird, wenn der Differenzwinkel (einen möglichst kleinen Wert angenommen hat.

**13.** Verfahren nach einem der vorhergehenden Ansprüche, **dadurch gekennzeichnet, dass** ein Eingriff in mindestens ein Bordsystem des Fahrzeugs (100) dann vorgenommen wird, wenn der Differenzwinkel ($\Psi_d$) den Wert Null annimmt.

**14.** Verfahren nach einem der vorhergehenden Ansprüche, **dadurch gekennzeichnet, dass** die Dauer eines Eingriffs in Abhängigkeit von der Geschwindigkeit des Fahrzeugs (100) festgelegt wird.

**15.** Verfahren nach einem der vorhergehenden Ansprüche, **dadurch gekennzeichnet, dass** der Eingriff eine Zeit ($\Delta t$) dauert.

**16.** Vorrichtung für die Steuerung eines Fahrerassistenzsystems (10) mit einer Funktion (LKS), bei der die Aktivierung der Funktion zu lateralen Pendelbewegungen des Fahrzeugs führen kann, mit Funktionsmodulen (5, 6), die derart ausgestaltet sind, dass in einem vor dem Fahrzeug (100) liegenden Bereich der Fahrspur (30) Zonen (Z1, Z2, Z3, Z4) mit vorgegebenen Bedingungen definiert werden, dass das Fahrzeug (100) die Zonen (Z1, Z2, Z3, Z4) sequenzen durchfährt, dass innerhalb der Zonen (Z1, Z2, Z3, Z4) überprüft wird, ob der jeweilige Fahrzustand des Fahrzeugs mit diesen Bedingungen übereinstimmt, und dass bei Übereinstimmung das Vorhandensein einer durch Eingriffe der Funktion (LKS) verursachten Pendelbewegung des Fahrzeugs (100) angenommen wird.

**Claims**

**1.** Method for controlling a driver assistance system (10) with a function (LKS), in which the activation of the function (LKS) can lead to lateral oscillating movements of the vehicle (100), **characterized in that** in a region of the lane (30) in front of the vehicle (100) zones (Z1, Z2, Z3, Z4) with predefined conditions are defined, **in that** the vehicle (100) travels through the zones (Z1, Z2, Z3, Z4) sequentially, **in that** within the zones (Z1, Z2, Z3, Z4) it is checked whether the respective driving state of the vehicle corresponds to these conditions, and **in that** when there is correspondence the presence of an oscillating movement of the vehicle (100) which is caused by interventions of the function (LKS) is assumed.

**2.** Method according to Claim 1, **characterized in that** in a first zone (Z1) directly in front of the vehicle (100) it is tested whether the vehicle (100) is moving away from a reference trajectory, for example the centre (30.3) of the lane, and if appropriate in which direction the vehicle (100) is moving away.

**3.** Method according to one of the preceding claims, **characterized in that** in the case of a movement of the vehicle (100) to the left a detection starting point (step 21) is set if the following condition is met:

$$(1) \quad -Y_{limit} > Y > -2 \cdot Y_{limit},$$

where
Y = cross-track distance of the vehicle and
$Y_{limit}$ = limiting value of the cross-track distance of the vehicle.

4. Method according to one of the preceding claims, **characterized in that** in the case of a movement of the vehicle (100) to the right a detection starting point (step 21) is set if the following condition is met:

$$(2) \quad Y_{limit} < Y < 2 \cdot Y_{limit},$$

where
Y = cross-track distance of the vehicle and
$Y_{limit}$ = limiting value of the cross-track distance of the vehicle.

5. Method according to one of the preceding claims, **characterized in that** a limiting value ($\Psi_{limit}$) of the difference angle ($\Psi_d$) is defined, wherein the angle between the direction of travel of the vehicle and the direction of a reference trajectory, for example the direction of the lane, is defined as a difference angle ($\Psi_d$), and **in that** in a second zone (Z2) which directly adjoins the first zone (Z1) the difference angle ($\Psi_d$) is measured and it is subsequently tested whether the absolute value of the measured difference angle ($\Psi_d$) is below the defined limiting value ($\Psi_{limit}$).

6. Method according to one of the preceding claims, **characterized in that** when the absolute value of the difference angle ($\Psi_d$) is exceeded, the cross-track distance ($Y_{zone\,2}$), present in the second zone (Z2), of the vehicle (100) is stored.

7. Method according to one of the preceding claims, **characterized in that** in a third zone (Z3) it is tested whether according to the result determined in the second zone (Z2) the absolute value of the difference angle ($\Psi_d$) is below the predefined limiting value ($\Psi_{limit}$), **in that** the cross-track distance ($Y_{zone\,3}$), present in the third zone (Z3), of the vehicle (100) is detected, **in that** the values of the cross-track distance which are detected in the second zone (Z2) and third zone (Z3) are compared with one another, **in that** a limiting value ($dY_{zone\,3}$) for the cross-track distance which is detected in the third zone (Z3) is determined, and **in that** it is tested whether the difference between the cross-track distances detected in the second and third zones is below this limiting value.

8. Method according to one of the preceding claims, **characterized in that** a time interval ($\Delta T$) is predefined for the detection of a lateral oscillating movement of the vehicle (100), **in that** in the case of non-detection of an oscillating movement within the time interval ($\Delta T$) the detection process is aborted and, if appropriate, started again anew at a later time.

9. Method according to one of the preceding claims, **characterized in that** the speed of the vehicle (100) is detected, **in that** a limiting value for the speed (minimum speed) is defined, and **in that** the detection method for the detection of an oscillating movement of the vehicle is initiated only when the speed of the vehicle exceeds the defined minimum speed.

10. Method according to one of the preceding claims, **characterized in that** a limiting value for the curvature of a reference trajectory, for example of the lane (30), is defined, **in that** the curvature of the reference trajectory (for example lane 30) is detected, and **in that** the detection method for detecting an oscillating movement of the vehicle (100) is initiated only when the absolute value of the curvature of the reference trajectory is below the defined limiting value of the curvature.

11. Method according to one of the preceding claims, **characterized in that** a limiting value for the steering torque is predefined, **in that** the steering torque is monitored, and **in that** the detection method for the detection of an oscillating movement of the vehicle is initiated only if the detected steering torque is not due to an intervention by the driver.

**12.** Method according to one of the preceding claims, **characterized in that** the difference angle between the direction of travel of the vehicle (100) and the profile of the reference trajectory (for example the lane 30) is monitored, and **in that** an intervention in at least one on-board system of the vehicle (100) is carried out after detection of an oscillating movement for damping said movement when the difference angle has assumed a value which is as small as possible.

**13.** Method according to one of the preceding claims, **characterized in that** intervention in at least one on-board system of the vehicle (100) is performed when the difference angle ($\Psi_d$) assumes the value zero.

**14.** Method according to one of the preceding claims, **characterized in that** the duration of an intervention is defined as a function of the speed of the vehicle (100).

**15.** Method according to one of the preceding claims, **characterized in that** the intervention lasts for a time ($\Delta t$).

**16.** Device for controlling a driver assistance system (10) having a function (LKS) in which the activation of the function can lead to lateral oscillating movements of the vehicle, having function modules (5, 6) which are configured in such a way that in a region of the lane (30) in front of the vehicle (100) zones (Z1, Z2, Z3, Z4) with predefined conditions are defined, in that the vehicle (100) travels through the zones (Z1, Z2, Z3, Z4) sequentially, in that within the zones (Z1, Z2, Z3, Z4) it is checked whether the respective driving state of the vehicle corresponds to these conditions, and in that when there is correspondence the presence of an oscillating movement of the vehicle (100) which is caused by interventions of the function (LKS) is assumed.

**Revendications**

**1.** Procédé pour la commande d'un système d'assistance au conducteur (10) comprenant une fonction (LKS), selon lequel l'activation de la fonction (LKS) peut donner lieu à des mouvements oscillants latéraux du véhicule (100), **caractérisé en ce que** des zones (Z1, Z2, Z3, Z4) dans lesquelles se trouvent des conditions prédéfinies sont définies dans une zone de la voie de circulation (30) qui se trouve devant le véhicule (100), **en ce que** le véhicule (100) traverse séquentiellement les zones (Z1, Z2, Z3, Z4), **en ce qu'**un contrôle est effectué à l'intérieur des zones (Z1, Z2, Z3, Z4) pour vérifier si l'état de conduite respectif du véhicule concorde avec ces conditions et **en ce qu'**en cas de concordance, la présence d'un mouvement oscillant du véhicule (100) provoqué par les interventions de la fonction (LKS) est supposée.

**2.** Procédé selon la revendication 1, **caractérisé en ce qu'**un contrôle est effectué dans une première zone (Z1) qui se trouve directement devant le véhicule (100) pour vérifier si et éventuellement dans quelle direction le véhicule (100) se déplace à partir d'une trajectoire de référence, par exemple du centre de la voie de circulation (30.3).

**3.** Procédé selon l'une des revendications précédentes, **caractérisé en ce que** lors d'un mouvement du véhicule (100) vers la gauche, un point de départ de détection (étape 21) est fixé lorsque la condition suivante est remplie :

$$(1) \quad -Y_{limite} > Y > -2.Y_{limite}, \text{ avec}$$

avec
Y = déviation transversale du véhicule et
$Y_{limite}$ = valeur limite de la déviation transversale du véhicule.

**4.** Procédé selon l'une des revendications précédentes, **caractérisé en ce que** lors d'un mouvement du véhicule (100) vers la droite, un point de départ de détection (étape 21) est fixé lorsque la condition suivante est remplie :

$$(2) \quad Y_{limite} < Y < 2.Y_{limite}, \text{ avec}$$

avec
Y = déviation transversale du véhicule et
$Y_{limite}$ = valeur limite de la déviation transversale du véhicule.

**5.** Procédé selon l'une des revendications précédentes, **caractérisé en ce qu'**une valeur limite ($\Psi_{limite}$) de l'angle différentiel ($\Psi_d$) est fixée, l'angle différentiel ($\Psi_d$) défini étant l'angle entre le sens de déplacement du véhicule et la direction d'une trajectoire de référence, par exemple la direction de la voie de circulation, et **en ce que** l'angle différentiel ($\Psi_d$) est mesuré dans une deuxième zone (Z2) directement juxtaposée à la première zone (Z1) et un contrôle est ensuite effectué pour vérifier si la valeur absolue de l'angle différentiel ($\Psi_d$) mesuré est inférieure à la valeur limite ($Y_{limite}$) fixée.

**6.** Procédé selon l'une des revendications précédentes, **caractérisé en ce qu'**en cas de franchissement vers le bas de la valeur absolue de l'angle différentiel ($\Psi_d$), la déviation transversale ($Y_{zone\ 2}$) du véhicule (100) présente dans la deuxième zone (Z2) est enregistrée.

**7.** Procédé selon l'une des revendications précédentes, **caractérisé en ce qu'**un contrôle est effectué dans une troisième zone (Z3) pour vérifier si, conformément au résultat déterminé dans la deuxième zone (Z2), la valeur absolue de l'angle différentiel ($\Psi_d$) est inférieur à la valeur limite ($\Psi_{limite}$) prédéfinie, **en ce que** la déviation transversale ($Y_{zone\ 3}$) du véhicule (100) présente dans la troisième zone (Z3) est détectée, **en ce que** les valeurs de la déviation transversale détectées dans la deuxième zone (Z2) et dans la troisième zone (Z3) sont comparées entre elles, **en ce qu'**une valeur limite ($dY_{zone\ 3}$) pour la déviation transversale détectée dans la troisième zone (Z3) est définie et un contrôle est effectué pour vérifier si la différence entre les déviations transversales détectées dans la deuxième et la troisième zone est inférieure à cette valeur limite.

**8.** Procédé selon l'une des revendications précédentes, **caractérisé en ce qu'**un intervalle de temps ($\Delta T$) est prédéfini pour la détection d'un mouvement oscillant latéral du véhicule (100), **en ce qu'**en cas de non détection d'un mouvement oscillant à l'intérieur de l'intervalle de temps ($\Delta T$), le processus de détection est interrompu et éventuellement redémarré à un moment ultérieur.

**9.** Procédé selon l'une des revendications précédentes, **caractérisé en ce que** la vitesse du véhicule (100) est détectée, **en ce qu'**une valeur limite est fixée pour la vitesse (vitesse minimale) et **en ce que** le processus de détection pour la détection d'un mouvement oscillant du véhicule n'est initié que lorsque la vitesse du véhicule dépasse la vitesse minimale fixée.

**10.** Procédé selon l'une des revendications précédentes, **caractérisé en ce qu'**une valeur limite est fixée pour la courbure d'une trajectoire de référence, par exemple de la voie de circulation (30), **en ce que** la courbure de la trajectoire de référence (par exemple la voie de circulation 30) est détectée et **en ce que** le processus de détection pour la détection d'un mouvement oscillant du véhicule (100) n'est initié que lorsque la valeur absolue de la courbure de la trajectoire de référence est inférieure à la valeur limite fixée de la courbure.

**11.** Procédé selon l'une des revendications précédentes, **caractérisé en ce qu'**une valeur limite pour le couple de direction est prédéfinie, **en ce que** le couple de direction est surveillé et **en ce que** le processus de détection pour la détection d'un mouvement oscillant du véhicule n'est initié que lorsque le couple de direction détecté ne peut pas être attribué à une intervention du conducteur.

**12.** Procédé selon l'une des revendications précédentes, **caractérisé en ce que** l'angle différentiel entre le sens de déplacement du véhicule (100) et le tracé de la trajectoire de référence (par exemple la voie de circulation 30) est surveillé, et **en ce qu'**une intervention dans au moins un système embarqué du véhicule (100) après la détection d'un mouvement oscillant en vue de son amortissement est effectuée lorsque l'angle différentiel a adopté une plus petite valeur possible.

**13.** Procédé selon l'une des revendications précédentes, **caractérisé en ce qu'**une intervention dans au moins un système embarqué du véhicule (100) est effectuée lorsque l'angle différentiel ($\Psi_d$) prend la valeur zéro.

**14.** Procédé selon l'une des revendications précédentes, **caractérisé en ce que** la durée de l'intervention est fixée en fonction de la vitesse du véhicule (100).

**15.** Procédé selon l'une des revendications précédentes, **caractérisé en ce que** l'intervention dure une durée ($\Delta t$).

**16.** Dispositif pour la commande d'un système d'assistance au conducteur (10) comprenant une fonction (LKS), dans lequel l'activation de la fonction peut donner lieu à des mouvements oscillants latéraux du véhicule, comprenant des modules fonctionnels (5, 6) qui sont configurés de telle sorte que des zones (Z1, Z2, Z3, Z4) possédant des conditions prédéfinies sont définies dans une zone de la voie de circulation (30) qui se trouve devant le véhicule (100), que le véhicule (100) traverse séquentiellement les zones (Z1, Z2, Z3, Z4), qu'un contrôle est effectué à l'intérieur des zones (Z1, Z2, Z3, Z4) pour vérifier si l'état de conduite respectif du véhicule concorde avec ces conditions et qu'en cas de concordance, la présence d'un mouvement oscillant du véhicule (100) provoqué par les interventions de la fonction (LKS) est supposée.

Fig. 1

20

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137292 A1
- DE 19720626 A1
- EP 1074904 A